(19) Europäisches Patentamt
European Patent Office
Office européen des brevets

(11) **EP 4 553 766 B1**

(12) **EUROPÄISCHE PATENTSCHRIFT**

(45) Veröffentlichungstag und Bekanntmachung des Hinweises auf die Patenterteilung:
**11.03.2026 Patentblatt 2026/11**

(21) Anmeldenummer: **23208358.4**

(22) Anmeldetag: **07.11.2023**

(51) Internationale Patentklassifikation (IPC):
**G06T 7/579** (2017.01)     **B60W 50/02** (2012.01)
**B60W 60/00** (2020.01)     **G06V 20/58** (2022.01)

(52) Gemeinsame Patentklassifikation (CPC):
**G06T 7/579; B60W 50/0205; B60W 60/0015;**
**G06V 20/58;** B60W 2050/0215; B60W 2556/20;
G06T 2207/10016; G06T 2207/20081;
G06T 2207/20084; G06T 2207/30252

(54) **VERFAHREN UND SYSTEM ZUR ÜBERWACHUNG EINES AUTONOM BEWEGBAREN FAHRZEUGS**

METHOD AND SYSTEM FOR MONITORING AN AUTONOMOUSLY MOVING VEHICLE

PROCÉDÉ ET SYSTÈME DE SURVEILLANCE D'UN VÉHICULE À DÉPLACEMENT AUTONOME

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**14.05.2025 Patentblatt 2025/20**

(73) Patentinhaber: **Spleenlab GmbH**
**07929 Saalburg-Ebersdorf (DE)**

(72) Erfinder:
• **MILZ, Stefan**
**07929 Saalburg-Ebersdorf (DE)**
• **KALLENBACH, Victor**
**07929 Saalburg-Ebersdorf (DE)**
• **BORER, Jack John**
**07929 Saalburg-Ebersdorf (DE)**

(74) Vertreter: **Steffens, Adrian**
**Boehmert & Boehmert**
**Anwaltspartnerschaft mbB**
**Pettenkoferstraße 22**
**80336 München (DE)**

(56) Entgegenhaltungen:
• **POGGI MATTEO ET AL: "On the Uncertainty of Self-Supervised Monocular Depth Estimation", 2020 IEEE/CVF CONFERENCE ON COMPUTER VISION AND PATTERN RECOGNITION (CVPR), IEEE, 13 June 2020 (2020-06-13), pages 3224 - 3234, XP033803528, DOI: 10.1109/ CVPR42600.2020.00329**
• **LUO XUAN ET AL: "Consistent video depth estimation", ACM TRANSACTIONS ON GRAPHICS, ACM, NY, US, vol. 39, no. 4, 8 July 2020 (2020-07-08), pages 71:1 - 71:13, XP058458574, ISSN: 0730-0301, DOI: 10.1145/ 3386569.3392377**
• **ZHOU TINGHUI ET AL: "Unsupervised Learning of Depth and Ego-Motion from Video", 2017 IEEE CONFERENCE ON COMPUTER VISION AND PATTERN RECOGNITION (CVPR), IEEE COMPUTER SOCIETY, US, 21 July 2017 (2017-07-21), pages 6612 - 6619, XP033250026, ISSN: 1063-6919, [retrieved on 20171106], DOI: 10.1109/CVPR.2017.700**

**Beschreibung**

Die Erfindung betrifft ein Verfahren und ein System zur Überwachung eines autonom bewegbaren Fahrzeugs.

Hintergrund

Aktuelle autonom bewegbare Fahrzeuge (zum Beispiel Roboter oder Drohnen) schätzen Abstände mittels Sensoren wie Kameras. Diese haben den Nachteil, dass Sie nicht direkt Tiefen (Abstände) messen können, sondern lediglich Texturen erfassen können. Im Stand der Technik sind künstliche neuronale Netze bekannt, welche Distanzen auf Basis von Bildern schätzen können. In Godard et al., Digging Into Self-Supervised Monocular Depth Estimation, ar-Xiv:1806.01260v4, wird beispielsweise die Bestimmung von Tiefen mittels neuronaler Netze und photometrischer Verlustfunktionen beschrieben.
Ein fertig trainiertes künstliches neuronales Netz kann anschließend im Fahrzeug benutzt werden, um Tiefeninformationen aus Sensordaten zu schätzen. Da derart geschätzte Tiefeninformationen auf der Ausgabe von künstlichen neuronalen Netzen basieren, kann eine zuverlässige Zertifizierung der Tiefeninformationen erschwert sein.
In Poggi Matteo at al., On the uncertainty of self-supervised monocular depth estimation, 2020 IEEE/CVF CONFERENCE ON COMPUTER VISION AND PATTERN RECOGNITION (CVPR), IEEE, 13. Juni 2020 (2020-06-13), Seiten 3224-3234, XP033803528, DOI: 10.1109/CVPR42600.2020.00329, wird ein Verfahren offenbart, das die Unsicherheit der Bestimmung von Tiefeninformationen aus einer Bildaufnahme mittels eines künstlichen neuronalen Netzes ermittelt.

Zusammenfassung

Aufgabe der Erfindung ist es, ein Verfahren und ein System zur Überwachung eines autonom bewegbaren Fahrzeugs anzugeben, mit welchen eine erhöhte Betriebssicherheit ermöglicht wird.
Gelöst wird die Aufgabe durch ein Verfahren und ein System zur Überwachung eines autonom bewegbaren Fahrzeugs gemäß den unabhängigen Ansprüchen. Weitere Ausgestaltungen sind Gegenstand abhängiger Unteransprüche.
Ein Aspekt der Erfindung betrifft ein Verfahren zur Überwachung eines autonom bewegbaren Fahrzeugs. Das Verfahren weist folgende Schritte auf, welche während einer Bewegung des autonom bewegbaren Fahrzeugs ausgeführt werden:

- Erfassen eines Ausgangsbildes (Ausgangsframes) zu einem Ausgangszeitpunkt und eines ersten Bildes (Frames) zu einem ersten Zeitpunkt mittels mindestens eines Sensors,
- Bestimmen von Tiefeninformationen (Distanzinformationen) für das Ausgangsbild mittels eines (ersten) künstlichen neuronalen Netzes,
- Bestimmen eines ersten projizierten Bildes für den ersten Zeitpunkt aus dem Ausgangsbild und den Tiefeninformationen,
- Bestimmen einer Güte der Tiefeninformationen mittels einer photometrischen Verlustfunktion basierend auf dem ersten Bild und dem ersten projizierten Bild und
- Überwachen des autonom bewegbaren Fahrzeugs unter Berücksichtigung der Güte der Tiefeninformationen.

Ein weiterer Aspekt der Erfindung betrifft ein System zur Überwachung eines autonom bewegten Fahrzeugs. Das System ist eingerichtet, folgende Schritte während einer Bewegung des autonom bewegbaren Fahrzeugs auszuführen:

- Erfassen eines Ausgangsbildes zu einem Ausgangszeitpunkt und eines ersten Bildes zu einem ersten Zeitpunkt mittels mindestens eines Sensors,
- Bestimmen von Tiefeninformationen für das Ausgangsbild (insbesondere aus dem Ausgangsbild) mittels eines (ersten) künstlichen neuronalen Netzes,
- Bestimmen eines ersten projizierten Bildes für den ersten Zeitpunkt aus dem Ausgangsbild und den Tiefeninformationen,
- Bestimmen einer Güte der Tiefeninformationen (Inferenzgüte) mittels einer photometrischen Verlustfunktion basierend auf dem ersten Bild und dem ersten projizierten Bild und
- Überwachen des autonom bewegbaren Fahrzeugs unter Berücksichtigung der Güte der Tiefeninformationen.

Mit der Erfindung unter Verwendung der photometrischen Verlustfunktion zur Laufzeit (während der Bewegung des Fahrzeugs) kann es ermöglicht werden, die Güte von ermittelten Tiefeninformationen zur Laufzeit verlässlich und auf

EP 4 553 766 B1

deterministische Weise zu bestimmen. Auf diese Weise kann ein *Safety Pattern* geschaffen werden, mittels welchem Tiefeninformationen validiert werden können. Des Weiteren kann eine Gütebestimmung frei von menschlicher Dateneingabe erfolgen.

Das autonom bewegbare Fahrzeug kann insbesondere fahrerlos und/oder automatisiert und/oder hochautomatisiert und/oder vollautomatisiert bewegbar sein.

Mindestens einer (bevorzugt jeder) der Schritte, welche während der Bewegung des autonom bewegbaren Fahrzeugs ausgeführt werden, kann (zumindest teilweise) in einer ersten Datenverarbeitungseinrichtung ausgeführt werden. Beispielsweise kann mindestens einer der Schritte Erfassen des Ausgangsbilds, Bestimmen von Tiefeninformationen, Bestimmen des ersten projizierten Bildes, Bestimmen einer Güte der Tiefeninformationen und Anpassen der Steuerung (zumindest teilweise) in der ersten Datenverarbeitungseinrichtung ausgeführt werden.

Die erste Datenverarbeitungseinrichtung kann beispielsweise im autonom bewegbaren Fahrzeug angeordnet sein.

Ergänzend oder alternativ kann auch mindestens einer oder jeder der Schritte, welche während der Bewegung des autonom bewegbaren Fahrzeugs ausgeführt werden, (zumindest teilweise) in einer zweiten Datenverarbeitungseinrichtung ausgeführt werden, welche von der ersten Datenverarbeitungseinrichtung räumlich getrennt ist. Insbesondere kann die zweite Datenverarbeitungseinrichtung außerhalb des autonom bewegbaren Fahrzeugs angeordnet sein. Die zweite Datenverarbeitungseinrichtung kann mit dem autonom bewegbaren Fahrzeug kommunikativ verbunden sein.

Das Überwachen des autonom bewegbaren Fahrzeugs kann ein Überwachen der Güte der Tiefeninformationen umfassen, insbesondere ein Vergleichen der Güte mit einem Güte-Schwellwert. Das Verfahren kann ein Steuern (mittels einer Steuerungsvorrichtung) und/oder ein Anpassen der Steuerung des autonom bewegbaren Fahrzeugs aufweisen, beispielsweise in Reaktion auf das Überwachen des autonom bewegbaren Fahrzeugs und/oder unter Berücksichtigung der Güte der Tiefeninformationen. Ergänzend oder alternativ können weitere Tiefeninformationen bestimmt und/oder erfasst werden, insbesondere mittels eines weiteren (aktiven) Sensors. Die Tiefeninformationen können mit den weiteren Tiefeninformationen verglichen werden. Das Anpassen der Steuerung kann auch in Abhängigkeit von einem Vergleichsergebnis von den Tiefeninformationen und den weiteren Tiefeninformationen erfolgen.

Das Bestimmen der Güte der Tiefeninformationen kann frei von künstlichen neuronalen Netzen erfolgen.

Das Anpassen der Steuerung kann beispielsweise mindestens eines von Lenken, Beschleunigen und Bremsen des autonom bewegbaren Fahrzeugs umfassen.

Das Verfahren kann des Weiteren mindestens einen der folgenden Schritte aufweisen, welche vorzugsweise während der Bewegung des autonom bewegbaren Fahrzeugs ausgeführt werden:

- Erfassen eines zweiten Bildes zu einem zweiten Zeitpunkt mittels des mindestens einen Sensors,
- Bestimmen eines zweiten projizierten Bildes für den zweiten Zeitpunkt aus dem Ausgangsbild und den Tiefeninformationen und
- Bestimmen der Güte der Tiefeninformationen mittels der photometrischen Verlustfunktion zusätzlich basierend auf dem zweiten Bild und dem zweiten projizierten Bild.

Der erste Zeitpunkt kann vor oder nach dem Ausgangszeitpunkt liegen. Der zweite Zeitpunkt kann nach oder vor dem Ausgangszeitpunkt liegen. Ein erster zeitlicher Abstand zwischen dem ersten Zeitpunkt und dem Ausgangszeitpunkt kann in einem Bereich von 0,1 ms bis 1,0 s liegen. Ein zweiter zeitlicher Abstand zwischen dem zweiten Zeitpunkt und dem Ausgangszeitpunkt kann in einem Bereich von 0,1 ms bis 1,0 s liegen. Der erste zeitliche Abstand und der zweite zeitliche Abstand können übereinstimmen.

Die Tiefeninformationen können eine Mehrzahl von Distanzwerten und/oder inversen Distanzwerten aufweisen, welche jeweils Pixeln des Ausgangsbildes zugeordnet sind.

Die Güte der Tiefeninformationen kann beispielsweise mittels Bestimmens eines (ersten) Funktionswerts der photometrischen Verlustfunktion für das erste Bild und das erste projizierte Bild und/oder eines zweiten Funktionswerts der photometrischen Verlustfunktion für das zweite Bild und das zweite projizierte Bild bestimmt werden.

Das Ausgangsbild und das erste Bild können jeweils monokulare Bildinformationen aufweisen. Des Weiteren kann das zweite Bild monokulare Bildinformationen aufweisen. Insbesondere können das Ausgangsbild, das erste Bild und wahlweise das zweite Bild jeweils (im Wesentlichen) monokulare Bildinformationen aufweisen. Zu diesem Zweck kann der mindestens eine Sensor eingerichtet sein, monokulare Bildinformationen zu erfassen.

Alternativ können das Ausgangsbild, das erste Bild und wahlweise das zweite Bild jeweils Stereo-Bildinformationen (Mehrfachansicht-Bildinformationen) aufweisen. Beispielsweise können das Ausgangsbild, das erste Bild und wahlweise das zweite Bild jeweils mittels mindestens zweier Sensoren erfasst werden. Es kann auch vorgesehen sein, dass der mindestens eine Sensor eingerichtet ist, Stereo-Bildinformationen zu erfassen.

Das Ausgangsbild, das erste Bild und optional das zweite Bild können Graustufeninformationen oder Farbinformationen aufweisen.

Der mindestens eine Sensor kann am (und/oder im) autonom bewegbaren Fahrzeug angeordnet sein. Mindestens ein (weiterer) Sensor kann außerhalb des autonom bewegbaren Fahrzeugs (vom autonom bewegbaren Fahrzeug beabstandet) angeordnet sein.

Der mindestens eine Sensor kann einen passiven Sensor aufweisen oder als passiver Sensor ausgebildet sein. Beispielsweise kann der mindestens eine Sensor eine Kamera oder ein Hodometer aufweisen. Die Kamera kann beispielsweise als eine IR-Kamera und/oder eine RGB-Kamera und/oder eine Monochrom-Kamera gebildet sein. Der mindestens eine Sensor kann zusätzlich auch einen aktiven Sensor aufweisen.

Das künstliche neuronale Netz kann vor der Bewegung des autonom bewegbaren Fahrzeugs mittels der photometrischen Verlustfunktion trainiert worden sein, vorzugsweise mittels Bildsequenzen aus zu verschiedenen Zeitpunkten erfassten Bildern (als Trainingsdaten). Die Bildsequenzen können unabhängig vom autonom bewegbaren Fahrzeug erfasst oder generiert worden sein.

Das künstliche neuronale Netz kann vorzugsweise außerhalb des autonom bewegbaren Fahrzeugs trainiert worden sein, beispielsweise in der zweiten Datenverarbeitungseinrichtung und/oder einer dritten Datenverarbeitungseinrichtung. Alternativ kann das künstliche neuronale Netz auch in der ersten Datenverarbeitungseinrichtung trainiert worden sein.

Das künstliche neuronale Netz kann vor der Bewegung des autonom bewegbaren Fahrzeugs selbstüberwacht (insbesondere ohne Verwendung von Labels) trainiert worden sein.

Das Verfahren kann des Weiteren mindestens einen der folgenden Schritte aufweisen, welche vorzugsweise während der Bewegung des autonom bewegbaren Fahrzeugs ausgeführt werden:

- Bestimmen einer ersten Pose, welche erste Positions- und/oder Orientierungsinformationen umfasst, aus dem Ausgangsbild und dem ersten Bild und
- Bestimmen des ersten projizierten Bildes aus dem Ausgangsbild, den Tiefeninformationen und der ersten Pose.

Das Verfahren kann außerdem aufweisen: Bestimmen einer zweiten Pose, welche zweite Positions- und/oder Orientierungsinformationen umfasst, aus dem Ausgangsbild und dem zweiten Bild und Bestimmen des zweiten projizierten Bildes aus dem Ausgangsbild, den Tiefeninformationen und der zweiten Pose.

Beispielsweise können das erste projizierte Bild und/oder das zweite projizierte Bild mittels eines zweiten neuronalen Netzes bestimmt werden. Das zweite neuronalen Netz kann vor der Bewegung des autonom bewegbaren Fahrzeugs trainiert worden sein. Das zweite neuronale Netz kann insbesondere mittels (weiterer) Bildsequenzen aus zu verschiedenen Zeitpunkten erfassten Bildern (als Trainingsdaten) trainiert worden sein.

Beim Trainieren des (ersten) künstlichen neuronalen Netzes können Trainingsposen bestimmt worden sein, insbesondere aus den Bildsequenzen. Beim Trainieren des künstlichen neuronalen Netzes können projizierte Trainingsbilder mittels des zweiten neuronalen Netzes bestimmt worden sein, insbesondere aus den Bildsequenzen, Trainings-Tiefeninformationen und den Trainingsposen. Beim Trainieren des künstlichen neuronalen Netzes können die projizierten Trainingsbilder mit erfassten Bildern aus den Bildsequenzen mittels der photometrischen Verlustfunktion verglichen worden sein. Des Weiteren können beim Trainieren des künstlichen neuronalen Netzes die Trainingsposen mittels des zweiten neuronalen Netzwerks bestimmt worden sein.

Die photometrische Verlustfunktion kann eine photometrische Fehlerfunktion aufweisen, die ein Abstandsmaß zwischen zwei Bildern angibt.

Insbesondere kann die photometrische Verlustfunktion eine Summe über Ergebnisse der photometrischen Fehlerfunktion (Fehlerfunktionsterm) zu verschiedenen Zeitpunkten aufweisen. Beispielsweise kann die photometrische Verlustfunktion einen Term $L_p$ aufweisen mit $L_p = \Sigma_{t'} \mathrm{pe}(I_t, I_{t' \to t})$, $I_{t' \to t} = I_{t'} \langle proj(D_t, T_{t \to t'}, K) \rangle$, photometrischer Fehlerfunktion pe, Tiefeninformationen $D_t$, Ausgangsbild $I_t$, erstem/zweitem Bild $I_{t'}$, Pose $T_{t \to t'}$, Sampling-Operator $\langle \cdot \rangle$ und Projektionsoperator proj (vgl. Godard et al., Digging Into Self-Supervised Monocular Depth Estimation, arXiv:1806.01260v4).

Alternativ hierzu kann die photometrische Verlustfunktion (als Fehlerfunktionsterm) ein Minimum über Ergebnisse der photometrischen Fehlerfunktion zu verschiedenen Zeitpunkten aufweisen. Beispielsweise kann die photometrische Verlustfunktion folgenden Term $L_p$ aufweisen mit $L_p = \min_{t'} \mathrm{pe}(I_t, I_{t' \to t})$.

Die photometrische Verlustfunktion kann des Weiteren einen Glätteterm aufweisen, insbesondere einen kantenbewussten Glätteterm (beispielsweise $L_s = |\partial_x d_t^*| \exp(-t|\partial_x I_t|) + |\partial_y d_t^*| \exp(-t|\partial_y I_t|)$ mit mittelwertnormalisierter inverser Tiefe $d_t^* = d_t / \overline{d_t}$).

Insbesondere kann die photometrische Verlustfunktion eine Linearkombination aus Fehlerfunktionsterm und Glätteterm aufweisen. Der Fehlerfunktionsterm kann pixelweise maskiert sein, sodass vorzugsweise nur solche Pixel berücksichtigt werden, für die der Reproduktionsfehler des transformierten Bildes $I_{t' \to c}$ kleiner als das untransformierte Bild $I_{t'}$ ist. Beispielsweise kann der Fehlerfunktionsterm mittels einer Maske $\mu$ maskiert sein mit

$$\mu = \left[\min_{t'} \operatorname{pe}(I_t, I_{t'\to t}) < \min_{t'} \operatorname{pe}(I_t, I_{t'})\right]$$ und Iverson-Klammer $[\cdot]$. Die photometrische Verlustfunktion kann speziell wie folgt gebildet sein: $L = \mu L_p + \lambda L_s$ mit $\lambda$ zwischen $10^{-5}$ und $10^{-1}$, vorzugsweise $10^{-3}$.

Die photometrische Fehlerfunktion kann einen Strukturelle-Ähnlichkeits-Term / Structural-Similarity(S-SIM)-Term und einen $L_1$-Term ($L_1$-Norm-Term) aufweisen. Insbesondere kann die photometrische Fehlerfunktion eine Linearkombination aus dem SSIM-Term und dem $L_1$-Term aufweisen. Beispielsweise kann die photometrische Fehlerfunktion wie folgt gebildet sein:

$$\operatorname{pe}(I_a, I_b) = \frac{\alpha}{2}\left(1 - \operatorname{SSIM}(I_a, I_b)\right) + (1 - \alpha)\|I_a - I_b\|_1,$$

mit SSIM-Term $\operatorname{SSIM}(I_a, I_b)$, $L_1$-Term $\|I_a - I_b\|_1$ (pixelweise Betragssumme), Bildern $I_a$, $I_b$ und Faktor $a$. Der Faktor $a$ kann zwischen 0.8 und 0.9 sein. Insbesondere kann der Faktor $a$ gleich 0.85 sein. Der SSIM-Term $\operatorname{SSIM}(I_a, I_b)$ kann wie folgt gebildet sein:

$$\operatorname{SSIM}(I_a, I_b) = \frac{(2\mu_a\mu_b + c_1)(2\sigma_{ab} + c_2)}{(\mu_a^2 + \mu_b^2 + c_1)(\sigma_a^2 + \sigma_b^2 + c_2)},$$

mit Mittelwerten $\mu_a$, $\mu_b$, Varianzen $\sigma_a$, $\sigma_b$, Kovarianz $\sigma_{ab}$ und Konstanten $c_1$, $c_2$ (vgl. Zhou Wang et al. (2004), Image Quality Assessment: From Error Visibility to Structural Similarity, IEEE Trans Image Process, Vol. 13, No. 4).

Das autonom bewegbare Fahrzeug ein Landfahrzeug (beispielsweise ein Roboter), ein Wasserfahrzeug oder ein Luftfahrzeug (beispielsweise eine Drohne) sein.

Die vorstehend im Zusammenhang mit dem Verfahren zur Steuerung eines autonom bewegbaren Fahrzeugs beschriebenen Ausgestaltungen können für das autonom bewegbare Fahrzeug entsprechend vorgesehen sein.

Beschreibung von Ausführungsbeispielen

Im Folgenden werden weitere Ausführungsbeispiele unter Bezugnahme auf Figuren einer Zeichnung näher erläutert. Hierbei zeigen:

Fig. 1    eine schematische Darstellung eines autonom bewegbaren Fahrzeugs sowie einer weiteren Datenverarbeitungseinrichtung und

Fig. 2    eine schematische Darstellung von Verfahrensschritten zur Überwachung eines autonom bewegbaren Fahrzeugs.

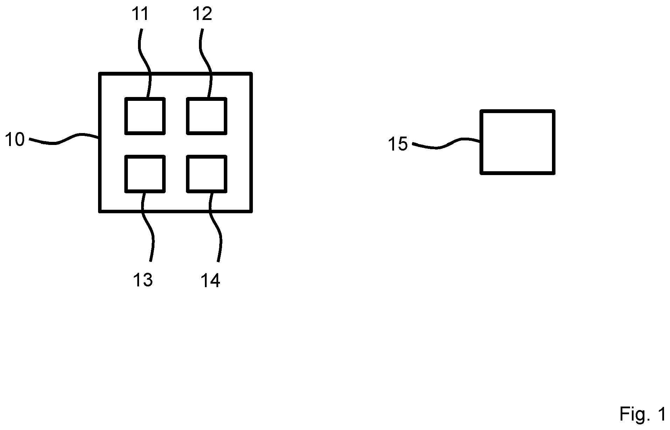

In Fig. 1 sind ein autonom bewegbares Fahrzeug 10, beispielsweise ein Landfahrzeug, sowie eine weitere Datenverarbeitungseinrichtung 15 schematisch dargestellt. Das autonom bewegbare Fahrzeug 10 weist insbesondere eine erste Datenverarbeitungseinrichtung 11, eine Kommunikationseinrichtung 12 (zum Senden und/oder Empfangen von Daten), mindestens einen Sensor 13 sowie eine Steuerungseinrichtung 14 auf. Des Weiteren kann eine weitere/zweite Datenverarbeitungseinrichtung 15 vorgesehen sein, welche mit dem autonom bewegbaren Fahrzeug 10 kommunikativ verbunden ist (beispielsweise über eine drahtlose Kommunikationsverbindung, insbesondere mittels der Kommunikationseinrichtung 12 sowie einer eigenen, weiteren Kommunikationseinrichtung (nicht dargestellt)).

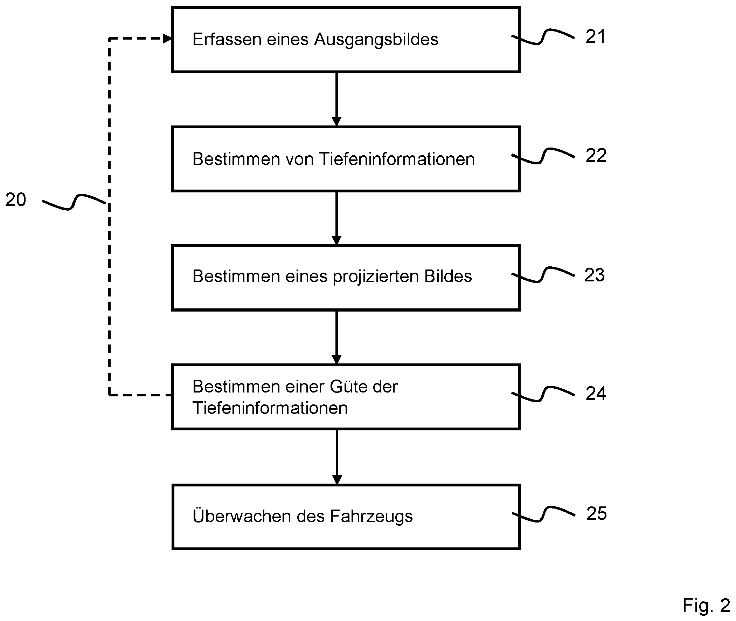

In Fig. 2 sind Verfahrensschritte zur Überwachung des autonom bewegbaren Fahrzeugs während einer Bewegung des autonom bewegbaren Fahrzeugs 10 schematisch dargestellt.

In einem ersten Schritt 21 wird ein Ausgangsbild zu einem Ausgangszeitpunkt, ein erstes Bild zu einem ersten Zeitpunkt (vor dem Ausgangszeitpunkt) und ein zweites Bild zu einem zweiten Zeitpunkt (nach dem Ausgangszeitpunkt) mittels mindestens eines Sensors, beispielsweise einer Kamera auf dem autonom bewegbaren Fahrzeug 10, erfasst.

Mittels eines ersten künstlichen neuronalen Netzes werden in einem zweiten Schritt 22 Tiefeninformationen für das Ausgangsbild bestimmt, wobei das künstliche neuronale Netz vor der Bewegung des autonom bewegbaren Fahrzeugs 10 mittels einer photometrischen Verlustfunktion und Bildsequenzen aus zu verschiedenen Zeitpunkten erfassten Bildern trainiert wurde.

In einem dritten Schritt 23 wird ein erstes projiziertes Bild für den ersten Zeitpunkt und ein zweites projiziertes Bild für den zweiten Zeitpunkt aus dem Ausgangsbild und den Tiefeninformationen bestimmt. Hierzu können beispielsweise eine erste Pose (welche erste Positions- und/oder Orientierungsinformationen umfasst) aus dem Ausgangsbild und dem ersten Bild und eine zweite Pose aus dem Ausgangsbild und dem zweiten Bild bestimmt und hieraus das erste bzw. zweite projizierte Bild bestimmt werden.

In einem vierten Schritt 24 wird eine Güte der Tiefeninformationen mittels einer photometrischen Verlustfunktion basierend auf dem ersten Bild und dem ersten projizierten Bild sowie dem zweiten Bild und dem zweiten projizierten Bild bestimmt. Die photometrische Verlustfunktion kann beispielsweise eine photometrische Fehlerfunktion aufweisen, die ein Abstandsmaß zwischen zwei Bildern angibt. Insbesondere kann die photometrische Fehlerfunktion einen (maskierten) SSIM-Term und einen $L_1$-Term aufweisen. Je niedriger Wert der photometrischen Verlustfunktion, desto höher die Güte der Tiefeninformationen.

Während und/oder vor und/oder nach dem Bestimmen der Güte der Tiefeninformationen (basierend auf dem Ausgangsbild) kann mindestens ein späteres Ausgangsbild erfasst werden (Pfeil 20). Während und/oder vor und/oder nach dem Bestimmen der Güte der Tiefeninformationen (basierend auf dem Ausgangsbild) können spätere Tiefeninformationen (basierend auf dem späteren Ausgangsbild) bestimmt werden. Die weiteren Schritte basierend auf dem späteren Ausgangsbild können den Schritten basierend auf dem Ausgangsbild entsprechend vorgesehen sein.

In einem fünften Schritt 25 wird das autonom bewegbare Fahrzeug unter Berücksichtigung der Güte der Tiefeninformationen überwacht. Je nach Güte der Tiefeninformationen können weitere Tiefeninformationen bestimmt und/oder die Steuerung des Fahrzeugs angepasst werden. Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zur Überwachung eines autonom bewegbaren Fahrzeugs (10) mit folgenden Schritten, welche während einer Bewegung des autonom bewegbaren Fahrzeugs (10) ausgeführt werden:

   - Erfassen eines Ausgangsbildes zu einem Ausgangszeitpunkt und eines ersten Bildes zu einem ersten Zeitpunkt mittels mindestens eines Sensors (13),
   - Bestimmen von Tiefeninformationen für das Ausgangsbild mittels eines künstlichen neuronalen Netzes,
   - Bestimmen eines ersten projizierten Bildes für den ersten Zeitpunkt aus dem Ausgangsbild und den Tiefeninformationen,
   - Bestimmen einer Güte der Tiefeninformationen mittels einer photometrischen Verlustfunktion basierend auf dem ersten Bild und dem ersten projizierten Bild und
   - Überwachen des autonom bewegbaren Fahrzeugs (10) unter Berücksichtigung der Güte der Tiefeninformationen.

2. Verfahren nach Anspruch 1, des Weiteren aufweisend:

   - Erfassen eines zweiten Bildes zu einem zweiten Zeitpunkt mittels des mindestens einen Sensors (13),
   - Bestimmen eines zweiten projizierten Bildes für den zweiten Zeitpunkt aus dem Ausgangsbild und den Tiefeninformationen und
   - Bestimmen der Güte der Tiefeninformationen mittels der photometrischen Verlustfunktion zusätzlich basierend auf dem zweiten Bild und dem zweiten projizierten Bild.

3. Verfahren nach Anspruch 1 oder 2, wobei das Ausgangsbild und das erste Bild jeweils monokulare Bildinformationen aufweisen.

4. Verfahren nach mindestens einem der vorstehenden Ansprüche, wobei der mindestens eine Sensor (13) einen passiven Sensor aufweist.

5. Verfahren nach mindestens einem der vorstehenden Ansprüche, wobei das künstliche neuronale Netz vor der Bewegung des autonom bewegbaren Fahrzeugs (10) mittels der photometrischen Verlustfunktion trainiert wurde.

6. Verfahren nach mindestens einem der vorstehenden Ansprüche, wobei das künstliche neuronale Netz vor der Bewegung des autonom bewegbaren Fahrzeugs (10) selbstüberwacht trainiert wurde.

7. Verfahren nach mindestens einem der vorstehenden Ansprüche, des Weiteren aufweisend:

   - Bestimmen einer ersten Pose, welche erste Positions- und/oder Orientierungsinformationen umfasst, aus dem Ausgangsbild und dem ersten Bild und
   - Bestimmen des ersten projizierten Bildes aus dem Ausgangsbild, den Tiefeninformationen und der ersten Pose.

8. Verfahren nach mindestens einem der vorstehenden Ansprüche, wobei die photometrische Verlustfunktion eine photometrische Fehlerfunktion aufweist, die ein Abstandsmaß zwischen zwei Bildern angibt.

9. Verfahren nach Anspruch 8, wobei die photometrische Fehlerfunktion einen Strukturelle-Ähnlichkeits-Term und einen $L_1$-Term aufweist.

10. Verfahren nach mindestens einem der vorstehenden Ansprüche, wobei das autonom bewegbare Fahrzeug (10) ein Landfahrzeug, ein Wasserfahrzeug oder ein Luftfahrzeug ist.

11. System zur Überwachung eines autonom bewegten Fahrzeugs (10), wobei das System eingerichtet ist, folgende Schritte während einer Bewegung des autonom bewegbaren Fahrzeugs (10) auszuführen:

- Erfassen eines Ausgangsbildes zu einem Ausgangszeitpunkt und eines ersten Bildes zu einem ersten Zeitpunkt mittels mindestens eines Sensors (13),
- Bestimmen von Tiefeninformationen für das Ausgangsbild mittels eines (ersten) künstlichen neuronalen Netzes,
- Bestimmen eines ersten projizierten Bildes für den ersten Zeitpunkt aus dem Ausgangsbild und den Tiefeninformationen,
- Bestimmen einer Güte der Tiefeninformationen mittels einer photometrischen Verlustfunktion basierend auf dem ersten Bild und dem ersten projizierten Bild und
- Überwachen des autonom bewegbaren Fahrzeugs (10) unter Berücksichtigung der Güte der Tiefeninformationen.

**Claims**

1. Method for monitoring an autonomously movable vehicle (10), having the following steps which are carried out during a movement of the autonomously movable vehicle (10):

- capturing an initial image at an initial time and a first image at a first time by means of at least one sensor (13),
- determining depth information for the initial image by means of an artificial neural network,
- determining a first projected image for the first time from the initial image and the depth information,
- determining a quality of the depth information by means of a photometric loss function based on the first image and the first projected image, and
- monitoring the autonomously movable vehicle (10) taking into account the quality of the depth information.

2. The method according to claim 1, further comprising:

- capturing a second image at a second time by means of the at least one sensor (13),
- determining a second projected image for the second time from the initial image and the depth information, and
- determining the quality of the depth information by means of the photometric loss function additionally based on the second image and the second projected image.

3. The method according to claim 1 or 2, wherein the initial image and the first image each comprise monocular image information.

4. The method according to at least one of the preceding claims, wherein the at least one sensor (13) comprises a passive sensor.

5. The method according to at least one of the preceding claims, wherein the artificial neural network has been trained by means of the photometric loss function prior to the movement of the autonomously movable vehicle (10).

6. The method according to at least one of the preceding claims, wherein the artificial neural network has been trained in a self-supervised manner prior to the movement of the autonomously movable vehicle (10).

7. The method according to at least one of the preceding claims, further comprising:

- determining a first pose, which comprises first position information and/or orientation information, from the initial image and the first image, and
- determining the first projected image from the initial image, the depth information, and the first pose.

8. The method according to at least one of the preceding claims, wherein the photometric loss function comprises a photometric error function which indicates a distance measure between two images.

9. The method according to claim 8, wherein the photometric error function comprises a structural similarity term and an $L_1$ term.

10. The method according to at least one of the preceding claims, wherein the autonomously movable vehicle (10) is a land vehicle, a watercraft, or an aircraft.

11. System for monitoring an autonomously movable vehicle (10), wherein the system is configured to carry out the following steps during a movement of the autonomously movable vehicle (10):

   - capturing an initial image at an initial time and a first image at a first time by means of at least one sensor (13),
   - determining depth information for the initial image by means of a (first) artificial neural network,
   - determining a first projected image for the first time from the initial image and the depth information,
   - determining a quality of the depth information by means of a photometric loss function based on the first image and the first projected image, and
   - monitoring the autonomously movable vehicle (10) taking into account the quality of the depth information.

**Revendications**

1. Procédé de surveillance d'un véhicule en mouvement autonome (10) comprenant les étapes suivantes, qui sont exécutées pendant un déplacement du véhicule autonome (10) :

   - l'acquisition d'une image initiale à un instant initial et d'une première image à un premier instant donné au moyen d'au moins un capteur (13) ;
   - la détermination des informations de profondeur de l'image initiale au moyen d'un réseau de neurones artificiels ;
   - la détermination d'une première image projetée à l'instant donné à partir de l'image initiale et des informations de profondeur ;
   - la détermination d'une qualité des informations de profondeur au moyen d'une fonction de perte photométrique basée sur la première image et la première image projetée et
   - la surveillance du véhicule en mouvement autonome (10) en tenant compte de la qualité des informations de profondeur.

2. Procédé selon la revendication 1, comprenant en outre :

   - l'acquisition d'une deuxième image à un deuxième instant donné au moyen d'au moins un capteur (13) ;
   - la détermination d'une deuxième image projetée au deuxième instant donné à partir de l'image initiale et des informations de profondeur ;
   - la détermination de la qualité des informations de profondeur au moyen de la fonction de perte photométrique, en se basant également sur la deuxième image et la deuxième image projetée.

3. Procédé selon la revendication 1 ou 2, dans lequel l'image originale et la première image présentent respectivement des informations d'image monoculaire.

4. Procédé selon au moins une des revendications précédentes, dans lequel au moins un capteur (13) est un capteur passif.

5. Procédé selon au moins une des revendications précédentes, dans lequel le réseau de neurones artificiels a été entraîné au moyen de la fonction de perte photométrique avant le déplacement du véhicule autonome (10).

6. Procédé selon au moins une des revendications précédentes, dans lequel le réseau de neurones artificiels a été entraîné sous supervision avant le déplacement du véhicule autonome (10).

**7.** Procédé selon au moins une des revendications précédentes, comprenant en outre :

- la détermination d'une première pose, qui comprend des informations de position et/ou d'orientation initiales, à partir de l'image source et de la première image ; et
- la détermination de la première image projetée à partir de l'image source, des informations de profondeur et de la première pose.

**8.** Procédé selon au moins une des revendications précédentes, dans lequel la fonction de perte photométrique présente une fonction d'erreur photométrique, qui spécifie une distance entre deux images.

**9.** Procédé selon la revendication 8, dans lequel la fonction d'erreur photométrique comprend un terme de similarité structurelle et un terme $L_1$.

**10.** Procédé selon au moins une des revendications précédentes, dans lequel le véhicule autonome (10) est un véhicule terrestre, un navire ou un aéronef.

**11.** Système de surveillance d'un véhicule en mouvement autonome (10), dans lequel le système est configuré pour effectuer les étapes suivantes pendant un déplacement du véhicule autonome (10) :

- l'acquisition d'une image initiale à un instant initial et d'une première image à un premier instant donné au moyen d'au moins un capteur (13) ;
- la détermination des informations de profondeur de l'image initiale au moyen d'un (premier) réseau de neurones artificiels ;
- la détermination d'une première image projetée à l'instant donné à partir de l'image initiale et des informations de profondeur ;
- la détermination d'une qualité des informations de profondeur au moyen d'une fonction de perte photométrique basée sur la première image et la première image projetée et
- la surveillance du véhicule en mouvement autonome (10) en tenant compte de la qualité des informations de profondeur.

Fig. 1

Erfassen eines Ausgangsbildes — 21

Bestimmen von Tiefeninformationen — 22

Bestimmen eines projizierten Bildes — 23

Bestimmen einer Güte der Tiefeninformationen — 24

Überwachen des Fahrzeugs — 25

20

EP 4 553 766 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **GODARD et al.** Digging Into Self-Supervised Monocular Depth Estimation. *ar-Xiv:1806.01260v4*
- On the uncertainty of self-supervised monocular depth estimation. **POGGI MATTEO**. 2020 IEEE/CVF CONFERENCE ON COMPUTER VISION AND PATTERN RECOGNITION (CVPR). IEEE, 13 June 2020, 3224-3234
- **VGL. GODARD et al.** Digging Into Self-Supervised Monocular Depth Estimation. *arXiv:1806.01260v4*
- **VGL. ZHOU WANG et al.** Image Quality Assessment: From Error Visibility to Structural Similarity. *IEEE Trans Image Process*, 2004, vol. 13 (4)